Europäisches Patentamt

European Patent Office

Office européen des brevets

(11) Publication number: **0 448 938 A1**

# EUROPEAN PATENT APPLICATION

(21) Application number: 91101447.0

(51) Int. Cl.⁵: **A23C 15/14**, A23C 15/04

(22) Date of filing: 04.02.91

(30) Priority: **27.02.90 US 486549**

(43) Date of publication of application:
**02.10.91 Bulletin 91/40**

(84) Designated Contracting States:
**AT BE CH DE DK ES FR GB GR IT LI LU NL SE**

(71) Applicant: **LAND O'LAKES INC.**
**4001 Lexington Avenue North**
**Arden Hills MN 55112(US)**

(72) Inventor: **Perry, John T., Jr.**
**6684 Central Avenue Northeast**
**Fridley, Minnesota 55432(US)**
Inventor: **Gillett, Tedford A.**
**9900 Keswick Avenue North**
**Stillwater, Minnesota 55082(US)**
Inventor: **Bumbalough, John E.**
**327 Oakwood Drive**
**Shoreview, Minnesota 55126(US)**

(74) Representative: **Vossius & Partner**
**Siebertstrasse 4 P.O. Box 86 07 67**
**W-8000 München 86(DE)**

(54) **Reduced cholesterol butter process.**

(57) A reduced cholesterol butter is made by removing substantially all of the volatile flavor components and cholesterol from anhydrous milkfat. Substantially all of the flavor components removed are then added back to the anhydrous milkfat and the fat content of the anhydrous milkfat is then decreased to that of conventional butter.

EP 0 448 938 A1

The present invention relates to butter, and in particular, relates to a low cholesterol butter product and a process of making the same.

Recently, there has been much discussion relating to the ill effects of cholesterol in the diet. There has been shown to be a correlation between heart and circulatory diseases and diet that contain higher amounts of cholesterol.

Butter is one of many products that contains cholesterol. With the great concern in reducing cholesterol in diet, the removal of cholesterol from butter would be desirable.

The present invention includes a process for producing a low cholesterol butter. The process includes removing substantially all of the volatile flavors and cholesterol from anhydrous milkfat and then adding back to the anhydrous milkfat substantially all of the removed flavors without the cholesterol. The fat content of the anhydrous milkfat is then decreased to that of conventional butter.

The anhydrous milkfat is preferably obtained using conventional butter making techniques. Forty-two percent fat cream is obtained from raw milk and its butter fat content increased to 80 percent. The 80 percent butter fat content which is an oil-in-water emulsion is then inverted to a water-in-oil emulsion. The fat content is further increased to approximately 99.8 percent by removing substantially all of the water and water soluble materials producing the anhydrous milkfat.

After the flavor has been added back to the anhydrous milkfat, conventional butter additives, such as salt, color, nitrogen, and sweet cream are added. In addition, further flavor enhancement of the product of the present invention may be obtained by adding cultured skim milk and/or conventional melted butter.

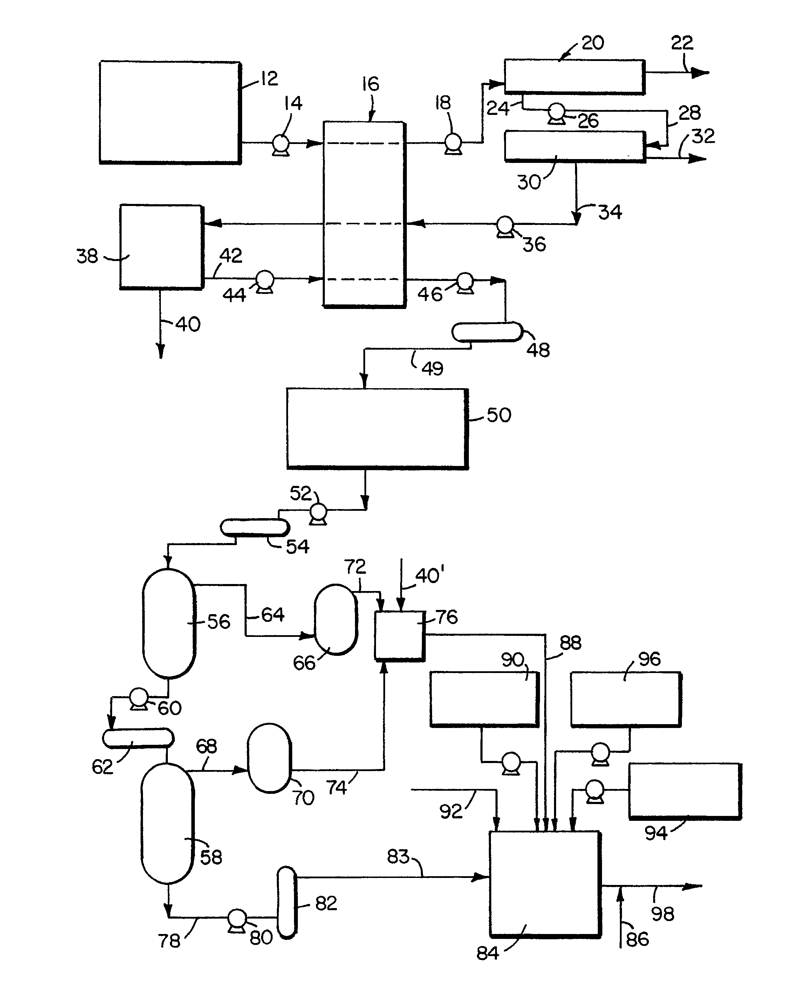

The drawing (Figure) is a flow diagram of a preferred embodiment of the process of the present invention.

The process of the present invention reduces the amount of cholesterol in butter by preferably 50 percent or greater. Preferably, the process includes many of the same steps included in a conventional continuous butter process. All references to percentage are by weight except where noted.

Cream having a 37 to 46 percent fat content is provided. The cream is pasteurized and separated to approximately 80 percent fat. At this point in the process, the 80 percent fat cream is an oil-in-water emulsion. The oil-in-water emulsion is subjected to a phase inversion step to produce a water-in-oil emulsion.

Further water is then removed by vacuum drying to obtain an anhydrous milkfat. Some flavor volatiles are removed along with the water and these flavor volatiles are recovered.

The anhydrous milkfat is then deaerated and heated to a temperature range of 232.2°C to 287.8°C. All of the volatile flavors and substantially all of the cholesterol are removed from the anhydrous milkfat.

Depending on the equipment used and the process conditions, the volatile flavor components and the cholesterol may be removed as one fraction from the anhydrous milkfat, or they may be removed as separate fractions. If the volatile flavor components and cholesterol are removed as one fraction, then the cholesterol can be separated from the volatile flavor components in an additional step. If the volatile flavor components and the cholesterol are removed in two separate steps, then there may not be any need for an additional step in separating the cholesterol from the volatile flavor components. Even if an attempt is made to remove the volatile flavor components separate of the cholesterol, there may be some overlap and some of the cholesterol may be removed along with the volatile flavor components in the initial fractionation step or some of the flavor components may be removed along with the cholesterol in the subsequent fractionation step. A second step will then be needed to separate whatever cholesterol is associated with the volatile flavor component. In all cases, these steps are within the scope of the present invention.

The flavor volatiles are collected and added back to the anhydrous milkfat. Skim milk and cream are added to reduce the fat content to that of conventional butter which by federal regulation has to be at least 80 percent. Optionally, salt, color, or nitrogen is also added. The result is butter having a substantial reduction in cholesterol content.

Referring to the figure which illustrates one working embodiment of the present invention, cream having a 37 to 46 percent fat content is produced from raw milk and is stored in a conventional silo or holding tank 12. The cream from the silo 12 is typically kept at 4.4°C and is pumped by a pump 14 through a heat exchanger 16. The fat cream is heated to a temperature of approximately 65.5°C and is pumped by pump 18 to a conventional separator 20.

The separator 20 separates off skim milk represented by stream 22 to produce an 80 percent fat cream represented by stream 24. At this point in the process, the cream is still an oil-in-water emulsion. The 80 percent fat oil-in-water emulsion is then processed through a high shear homogenizing valve or centrifugal pump 26 to invert the phase of the 80 percent fat cream to a water-in-oil emulsion as represented by stream 28. The particular piece of equipment used to produce the phase inversion is not important.

Next, the 80 percent fat water-in-oil emulsion is passed through a second separator 30 in which water soluble materials are removed as skim milk as represented by stream 32 to produce stream 34 having a 99.5 percent fat. The stream 34 is further pumped by pump 36 through the heat exchanger 16 and heated to approximately 87.8° C.

After heating to 87.8° C, the 99.5 percent fat content cream is processed through a vacuum chamber 38 which removes additional moisture and increases the fat content to approximately 99.8 percent. In the vacuum chamber 38, some flavor volatiles are removed along with the moisture as represented by stream 40. Stream 40 is collected and the flavor volatiles are separated from the moisture to be added back, as will be described subsequently.

The 99.8 percent fat content stream 42 is pumped by pump 44 through the heat exchanger 16 and pumped further by pump 46 to an additional heater 48 to raise the temperature to a range of 104.4° C to 132.2° C. The stream 49 is then processed through a deaerater 50. Deaeration is accomplished by subjecting the fat to a partial vacuum to reduce the dissolved oxygen to less than about 0.05 percent. The oxygen content is reduced to prevent oxidation of the fat by dissolved oxygen.

After the deaerater 50, the deaerated fat is pumped by pump 52 through a heat exchanger 54 which increases the temperature of the stream to an approximate range of 232.2° C to 287.8° C.

In the preferred embodiment illustrated in the figure, two columns 56 and 58 are sequentially employed to remove volatile flavors and cholesterol, the first column 56 removing the volatile flavors 64, and the second column 58 removing the cholesterol 68. However, it is contemplated that other arrangements such as a single column for removing both flavor volatiles and cholesterol may also be used, or more than two columns.

In the preferred embodiment, both the first and second columns 56 and 58 are packed columns. The anhydrous milkfat trickles down over the packing while steam is introduced at the bottom of the column and passes up through the column making close contact with the fat, removing volatile flavors in column 56 and cholesterol in column 58. In addition, some volatile fractions of the butter fat may also be removed. In both columns, the steam is introduced in an amount between 5 and 20 percent by weight of the feed. In both columns, the fat is kept at a temperature between 232.2° C to 287.8° C. The fat is transported from the first column 56 via pump 60 and further heated by heater 62 to insure that the fat is in the desired temperature range.

In the preferred embodiment, the packing is a stainless steel ring-type packing that provides a 90 to 95 percent void volume in the column. Although a preferred packing is described, any packing having a void volume sufficient to permit removal of the cholesterol and flavor component is within the scope of the invention. The high void volume is needed so that the steam which is under vacuum is permitted to pass through the liquid fat without holding the liquid fat up in the column.

The volatile flavors as represented by stream 64 are recovered from column 56 and introduced into a condenser 66. Similarly, the cholesterol removed from the anhydrous milkfat in the second column 58, as represented by stream 68, is introduced into condenser 70. The upper distillate 72 from the condenser 66 and the lower distillate 74 from the condenser 70 are transported to flavor recovery station 76. In addition, the volatile flavors recovered from stream 40 from the vacuum chamber 38 are separated from the water and are combined with recovered flavor stream 72 and 74 at flavor station 76, as represented by stream 40'.

The anhydrous milkfat, as represented by stream 78 after the second column 58, is a bland, decholesterolized, butter fat stream. The stream 78 is pumped by pump 80 through a chiller 82 which reduces the stream's temperature to approximately 48.9° C. The cooled stream 83 is then introduced into one or more mixing tanks 84. In the mixing tanks 84, the bland decholesterolized butter fat is processed back into butter. The recovered flavors 88 are introduced back into the butter fat. The butter fat content is decreased to an 80 percent butter fat content by introduction of skim milk and/or cream 90. In addition, optional salt and/or color 92 are also introduced into the mixing tanks 84.

Further enhancement of the flavor of the butter produced by the process of the present invention is accomplished by introducing cultured skim milk 94. Additional flavoring can also be obtained by introducing melted butter 96. Introducing conventional melted butter will, of course, introduce cholesterol back into the final product, however, a lower cholesterol product is still obtained.

After mixing, the liquid butter 98 is then transported to a swept surface heat exchanger (not illustrated) in which the liquid butter is cooled to its crystallization temperature. Prior to introduction into the swept surface heat exchanger, nitrogen 86 may be introduced into the liquid butter for texture purposes. The cooled butter may either be printed as conventional butter or may be bulk packaged for storage and for further processing.

Although the present invention has been described with reference to preferred embodiments, workers skilled in the art will recognize that changes may be made in form and detail without departing from the spirit and scope of the invention.

## Claims

1. A dairy-based product having a reduced cholesterol level and whose flavor components have been removed and added back.

2. The product of claim 1 wherein cultured skim milk has been added as a further flavor enhancer.

3. The product of claim 1 wherein conventional butter has been added as a flavor enhancer.

4. A process for producing the product of claim 1, the process comprising:
   providing a substantially anhydrous fat component;
   removing substantially all of the volatile flavor components and cholesterol from the fat;
   adding back to the fat component the removed volatile flavors; and
   reducing the fat content of the anhydrous fat to a selected level of the final product.

5. The process of claim 4 wherein the fat content is reduced by the addition of skim milk.

6. The process of claims 4 or 5 wherein cultured skim milk is added to further enhance the flavor of the final product.

7. The process of claims 4 or 5 wherein conventional butter is added to enhance the flavor of the final product.

8. The process of any of claims 4 to 7 wherein the volatile flavors and cholesterol are removed from the anhydrous fat through the use of steam in a packed column.

9. The process of claim 8 wherein the volatile flavors are removed in a first packed column and the cholesterol is removed in a second packed column.

EP 0 448 938 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 329 347  (NEW ZEALAND DAIRY RESEARCH INSTITUTE)<br>* Claims 1,4,14,30,31; page 5, lines 5-7; page 5, lines 30-31; page 8, lines 15-18; page 9, lines 29-33; page 9, lines 10-19 * | 1,4,5 | A 23 C 15/14<br>A 23 C 15/04 |
| Y | | 2,6 | |
| P,X | EP-A-0 395 962  (H. HOCHE)<br>* Claims 1,8,9-13,15; column 4, lines 38-47; column 5, line 49 - column 6, line 22 * | 1,4 | |
| A | WO-A-8 802 989  (D. FRONEK et al.)<br>* Claims 1,17,18; example 3 * | 1 | |
| Y | US-A-2 414 837  (L. RIGGS)<br>* Claim 1; column 4; fig. * | 2,6 | |

| | | | TECHNICAL FIELDS SEARCHED (Int. Cl.5) |
|---|---|---|---|
| | | | A 23 C |

The present search report has been drawn up for all claims

| Place of search | Date of completion of search | Examiner |
|---|---|---|
| The Hague | 05 June 91 | DESMEDT G.R.A. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document